# EUROPÄISCHE PATENTSCHRIFT

(11) **EP 1 853 408 B1**
(45) Veröffentlichungstag und Bekanntmachung des Hinweises auf die Patenterteilung: **17.03.2010**
(21) Anmeldenummer: 06706409.7
(22) Anmeldetag: 26.01.2006
(51) Int. Cl.: B25B 23/14, F16B 37/00

(54) **VORRICHTUNG UND VERFAHREN ZUM HERSTELLEN EINER SCHRAUBVERBINDUNG ZWISCHEN EINEM ERSTEN BAUTEIL UND MINDESTENS EINEM WEITEREN BAUTEIL**
DEVICE AND METHOD FOR PRODUCING A SCREW CONNECTION BETWEEN A FIRST COMPONENT AND AT LEAST ONE ADDITIONAL COMPONENT
DISPOSITIF ET PROCEDE POUR ETABLIR UN ASSEMBLAGE PAR VIS ENTRE UN PREMIER ELEMENT CONSTITUTIF ET AU MOINS UN AUTRE ELEMENT CONSTITUTIF

(30) Priorität: 01.03.2005 DE 102005009879
(43) Veröffentlichungstag der Anmeldung: 14.11.2007
(73) Patentinhaber: Winker Massivumformung GmbH & Co. KG, 78549 Spaichingen (DE); Schaeffler KG, 97421 Schweinfurt (DE)
(72) Erfinder: WINKER, Alexander, 78549 Spaichingen (DE); KÖNIGER, Florian, 97422 Schweinfurt (DE); BREITENBACH, Rainer, 97469 Gochsheim (DE)
(74) Vertreter: Lewandowsky, Klaus
(86) Internationale Anmeldenummer: PCT/EP2006/000649
(87) Internationale Veröffentlichungsnummer: WO 2006/092191

(56) Entgegenhaltungen:
- DE-A1- 10 355 684
- DE-A1- 19 543 436
- FR-A- 1 265 371

## Beschreibung

Die vorliegende Erfindung betrifft eine Vorrichtung zum Herstellen einer Schraubverbindung zwischen einem ersten Bauteil und mindestens einem weiteren Bauteil nach dem Oberbegriff von Anspruch 1 sowie ein Verfahren zum Herstellen einer derartigen Verbindung nach dem Oberbegriff von Anspruch 18.

In konventionellen Verfahren werden die zu verbindenden Bauteile unter Anlage der Bauteile und der Befestigungsschraube bzw. Befestigungsmutter aneinander zusammengefügt und verspannt. Das bedeutet, dass die aus dem aufgebrachten Drehmoment resultierende Klemmkraft um die beim Zusammenfügen auftretenden Reibkräfte (Gewindereibung einerseits und Kopfreibung andererseits) vermindert ist. Diese Reibkräfte können nicht genau quantifiziert werden. Darüber hinaus führt die bereits während des Zusammenfügens auftretende Kopfreibung zu einer Veränderung der Bauteiloberfläche, die bis zur Zerstörung gehen kann. Dadurch wird der Reibwert der Schraubverbindung unkontrollierbar verändert. Die resultierende Klemmkraft kann daher nicht genau bestimmt, sondern nur abgeschätzt werden.

Deswegen müssen die Schraubverbindungen aus Sicherheitsgründen im Zweifel größer dimensioniert werden, als eigentlich notwendig ist, bspw. im Fahrzeugbau, um die erforderliche Klemmkraft sicher zu erreichen. Diese Schraubverbindungen sind daher auch schwerer als erforderlich, wobei der Gewichtsnachteil als nachteilig empfunden wird.

Eine Vorrichtung gemäß dem Oberbegriff des Anspruchs 1 bzw. ein Verfahren gemäß dem Oberbegriff des Anspruchs 18 ist aus der unveröffentlichten deutschen Patentanmeldung 103 55 684.2 dem Anmelder bekannt. Das gattungsgemäße Verfahren sieht vor, dass die für das Zusammenfügen zweier Bauteile mittels einer Schraubverbindung aufzubringende Fügekraft und die für das Verspannen der Bauteile aufzubringende Klemmkraft zeitlich nacheinander wirksam werden. Beim Aufbringen der Fügekraft liegt die Befestigungsschraube bzw. Befestigungsmutter nicht am Bauteil an, so dass die Kopfreibung wegfällt und die Bauteiloberfläche während des Zusammenfügens nicht beeinträchtigt oder gar zerstört wird. Der Reibwert ist daher besser kontrollierbar und bleibt im Idealfall im Wesentlichen unverändert. Daher kann die Größe der Klemmkraft während des eigentlichen Verspannens besser abgeschätzt werden.

Die gattungsgemäße Vorrichtung zeichnet sich dadurch aus, dass sie ein drehbar angeordnetes Werkzeug aufweist, in dem die Befestigungsmutter bzw. Befestigungsschraube unverdrehbar und während des Zusammenfügens der Bauteile zum ersten Bauteil beabstandet gehalten ist. Erst wenn die beiden Bauteile aneinander anliegen, wird die Schraubverbindung verspannt.

Aber auch in diesem Fall bleibt ein Unsicherheitsfaktor bestehen, da die Größe der Klemmkraft nach wie vor nur geschätzt werden kann. Das Ende des Fügevorgangs der Bauteile kann ferner nicht exakt definiert werden. Wenn das Zusammenfügen beendet ist, steigt zwar das Drehmoment an, aber dieser Punkt ist nur schwer erkennbar. Außerdem ist die Herstellung der Schraubverbindung mit dem gattungsgemäßen Werkzeug nicht automatisierbar, weil der eigentliche Schraubvorgang einmal unterbrochen werden muss.

Die Aufgabe der vorliegenden Erfindung besteht somit darin, ein Verfahren bzw. eine Vorrichtung der o.g. Art bereit zu stellen, welche diesen Unsicherheitsfaktor zumindest weiter reduzieren und eine Automatisierung des Schraubvorgangs ermöglichen.

Die Lösung besteht in einer Vorrichtung mit den Merkmalen des Anspruchs 1 bzw. in einem Verfahren mit den Merkmalen des Anspruchs 18. Erfindungsgemäß ist vorgesehen, dass zwischen dem Werkzeug und dem ersten Bauteil ein Kraftspeicher vorgesehen ist. Das erfindungsgemäße Verfahren zeichnet sich dadurch aus, dass zumindest die Fügekraft zwischen der Befestigungsmutter bzw. der Befestigungsschraube und dem ersten Bauteil mittels eines Kraftspeichers vorbestimmt wird.

Beim Zusammenfügen der Bauteile durch Drehen einer Befestigungsmutter wird das korrespondierende Befestigungselement in die Mutter hineingezogen. In gleicher Weise wird beim Drehen einer Befestigungsschraube das korrespondierende Befestigungselement an die Befestigungsschraube herangezogen. In jedem Fall wird die Befestigungsmutter bzw. Befestigungsschraube relativ zum Werkzeug und relativ zu den Bauteilen nicht axial bewegt. Die Befestigungsmutter bzw. der Kopf der Befestigungsschraube wird vielmehr in einem Abstand zum ersten Bauteil gehalten. Dieser Abstand ist im Wesentlichen konstant, kann aber selbstverständlich während des Zusammenfügens der Bauteile durchaus auch schwanken, bspw. durch Stöße von außen oder bedingt durch konstruktive Einflüsse des Kraftspeichers, ohne jedoch auf Null zu schrumpfen. Die Größe des Abstands hängt dabei von der Dimensionierung der erfindungsgemäßen Vorrichtung bzw. der zusammenzufügenden Teile ab. Beispielhafte Werte sind etwa 0,2 bis 1,5 mm.

Der Kraftspeicher zwischen dem Werkzeug und dem ersten Bauteil dient zunächst dazu, diesen Abstand aufrecht zu erhalten. Der Kraftspeicher ist so eingestellt bzw. bemessen, dass der Abstand zumindest so lange aufrecht erhalten wird, bis die beiden Bauteile zusammengefügt sind, ohne dass die Speicherkraft des Kraftspeichers überschritten wird. Vielmehr ist die Speicherkraft, die zum Zusammenfügen der Bauteile benötigt wird, mindestens gleich der Fügekraft. Bei weiterem Drehen der Befestigungsmutter bzw. Befestigungsschraube nach dem Zusammenfügen wird die eingebrachte Kraft größer als die Speicherkraft. Dann wird der Kraftspeicher zusammengedrückt, bis die Befestigungsmutter bzw. der Kopf der Befestigungsschraube am ersten Bauteil anliegt. Anschließend wird die Schraubverbindung verspannt. Dann wird die Verbindung zwischen Befestigungsmutter bzw. Befestigungsschraube einerseits und dem Werkzeug andererseits gelöst.

Mit anderen Worten: Zumindest die gewünschte Fügekraft der Schraubverbindung kann durch geeignete Dimensionierung bzw. Einstellung des Kraftspeichers vorbestimmt werden. Daher kann auch die Klemmkraft der Schraubverbindung, die beim anschließenden Verspannen aufgebracht wird, besser abgeschätzt werden. Dies war bisher nicht möglich. Mit der Voreinstellung der Fügekraft wird auch das Problem vermieden, das Ende des Fügevorgangs zu erkennen, weil dieses Ende durch die Voreinstellung der Fügekraft vordefiniert ist. Schließlich kann der eigentliche Schraubvorgang ohne Unterbrechung bis zum Verspannen der Schraubverbindung durchgeführt werden. Das erfindungsgemäße Verfahren ist daher im Prinzip automatisierbar.

Ein weiterer Vorteil besteht darin, dass durch die Beabstandung der Befestigungsmutter bzw. Befestigungsschraube vom ersten Bauteil während des Zusammenfügens der Bauteile keine Glättungseffekte mehr gibt. Mit anderen Worten: Die Lösemomente sind erhöht und können sogar durch Bearbeitung (bspw. Aufrauen oder Einbringen einer gerippten Auflagefläche) der Oberfläche des ersten Bauteils und/oder der Befestigungsmutter bzw. des Kopfes der Befestigungsschraube gezielt erhöht werden. Damit wird einem unbeabsichtigten Lösen der Schraubverbindung vorgebeugt.

Die Befestigungsmutter mit einem Außenmehrkant und einer dem Außenmehrkant benachbarten Klemmschulter ist vergleichsweise einfach herzustellen, bspw. durch Pressen oder Eindrehen einer Ringnut, und hält den in der erfindungsgemäßen Vorrichtung auftretenden Belastungen stand.

Vorteilhafte Weiterbildungen ergeben sich aus den Unteransprüchen.

Der mindestens eine Kraftspeicher ist vorzugsweise als in Fügerichtung der Bauteile um den Abstand S kraftabhängig komprimierbare und expandierbare Einrichtung ausgebildet. Ein solcher Kraftspeicher ist also in seiner Länge veränderbar. Diese Längenänderung erfolgt in der Richtung, in der sich auch die zu fügenden Bauteile aufeinander zu bewegen. Der mindestens eine Kraftspeicher kann als mechanisch, hydraulisch oder pneumatisch arbeitende Einrichtung ausgebildet sein. Beispiele für eine mechanisch arbeitende Einrichtung sind Feder- oder Reibspeicher, wobei ein Federspeicher vorzugsweise mindestens ein Federelement, bspw. mindestens eine Druckfeder, aufweist. Selbstverständlich sind auch Kombinationen verschiedener Speicher denkbar.

Durch die Gestaltung bzw. Auslegung des Kraftspeichers kann zumindest die Fügekraft, im Maximalfall die gesamte gewünschte Klemmkraft der fertigen Schraubverbindung vorbestimmt werden. In diesem letzteren Fall wird die im Kraftspeicher gespeicherte Kraft als Klemmkraft auf die fertige Schraubverbindung übertragen.

Insbesondere die Vorbestimmung der Klemmkraft erlaubt es, Schraubverbindungen bedarfsgerecht zu dimensionieren und gleichzeitig allen Sicherheitsanforderungen zuverlässig zu genügen. Eine Überdimensionierung von Schraubverbindungen aus Sicherheitsgründen ist nicht mehr nötig.

Wenn der mindestens eine Kraftspeicher bspw. als hydraulisch oder pneumatisch arbeitende Einrichtung ausgestaltet ist, kann die erfindungsgemäße Vorrichtung auch als Kraftmesseinrichtung verwendet werden. Dabei wird die eingebrachte Kraft über den Druck gemessen. Dies stellt eine externe Messung dar, d.h. es ist bspw. keine Kraftmessdose innerhalb der Schraubverbindung erforderlich. Auf diese Weise werden Verfälschungen der Messwerte vermieden.

Ausführungsbeispiele der vorliegenden Erfindung werden im Folgenden anhand der beigefügten Zeichnungen näher beschrieben. Es zeigen:
- Figur 1: ein erstes Ausführungsbeispiel der erfindungsgemäßen Vorrichtung im Schnitt in einer schematischen, nicht maßstabsgetreuen Darstellung;
- Figuren 2 bis 6: eine Schnittdarstellung eines weiteren Ausführungsbeispiels der erfindungsgemäßen Vorrichtung in verschiedenen Phasen des erfindungsgemäßen Verfahrens;
- Figur 7: eine vergrößerte Detailansicht des Kraftspeichers aus den Figuren 2 bis 6;
- Figur 8: eine vergrößerte Detailansicht einer Befestigungsmutter im Werkzeug aus den Figuren 2 bis 6;
- Figur 9a: eine perspektivische Darstellung eines ersten Ausführungsbeispiels einer Befestigungsmutter;
- Figur 9b: die Befestigungsmutter aus Figur 9a in einer Draufsicht;
- Figur 9c: die Befestigungsmutter aus Figur 9a in einer teilweise geschnittenen Darstellung;
- Figur 10: ein weiteres Ausführungsbeispiel einer Befestigungsmutter in einer teilweise geschnittenen Darstellung.

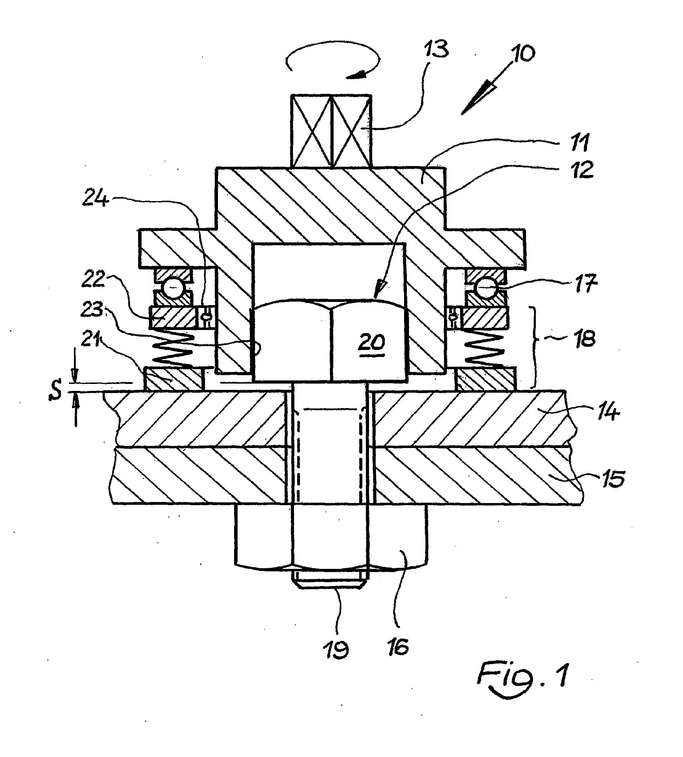

Figur 1 zeigt ein erstes Ausführungsbeispiel der erfindungsgemäßen Vorrichtung 10 in einer Prinzipdarstellung. Die Vorrichtung 10 umfasst ein Werkzeug 11, in dem eine Befestigungsschraube 12 (oder eine Befestigungsmutter, hier nicht dargestellt) in einem Haltebereich 23 unverdrehbar und axial ortsfest gehalten ist. Dies kann auf beliebige geeignete Weise, bspw. durch Klemmen (Klemmkörper, Klemmzangen, etc.), durch hydraulisch oder pneumatisch wirkende Vorrichtungen oder bspw. durch Magnete geschehen. Zum Einleiten eines Drehmoments auf das Werkzeug 11 ist ein Mehrkant 13 vorgesehen. Hierfür kann selbstverständlich auch eine andere geeignete, bspw. hydraulisch oder pneumatisch wirkende Vorrichtung vorgesehen sein. Die Befestigungsschraube 12 (bzw. die Befestigungsmutter) dient zum Herstellen einer Schraubverbindung zwischen einem ersten Bauteil 14 und einem zweiten Bauteil 15. Hierfür ist ein korrespondierendes Befestigungselement, bspw. wie dargestellt eine Mutter 16 oder ein beliebiges Befestigungselement mit Innengewinde vorgesehen. Das Werkzeug 11 stützt sich im Ausführungsbeispiel über ein Axiallager 17, einen Lagerflansch 22, einen Kraftspeicher 18 und einen Stützflansch 21 auf dem ersten Bauteil 14 ab. Der Lagerflansch 22 ist über ein Lager 24 auf dem Werkzeug 11 gelagert. Der Kraftspeicher 18 ist als Feder, d.h. als mechanischer Kraftspeicher angedeutet. Selbstverständlich ist auch ein beliebiger anderer geeigneter, bspw. hydraulisch oder pneumatisch wirkender Kraftspeicher geeignet.

Die mittels der Befestigungsschraube 12 und der Mutter 16 hergestellte Schraubverbindung soll die beiden Bauteile 14, 15 mit einer bestimmten Klemmkraft zusammen halten.

Beim Zusammenfügen der Bauteile 14, 15 durch Drehen des Werkzeugs 11 und damit der Befestigungsschraube 12 wird die korrespondierende Mutter 16 auf den Gewindeschaft 19 aufgezogen. Die Befestigungsschraube 12 wird dabei axial nicht bewegt. Der Kopf 20 der Befestigungsschraube 12 wird vielmehr in einem konstanten Abstand S zum ersten Bauteil 14 gehalten. Der Kraftspeicher 18 zwischen dem Werkzeug 11 und dem ersten Bauteil 14 dient zunächst dazu, diesen Abstand S aufrecht zu erhalten. Dabei wird durch das Drehen des Werkzeugs 11 eine Klemmkraft aufgebaut, die vom Kraftspeicher 18 aufgenommen wird. Die Größe der vom Kraftspeicher 18 aufgenommenen Kraft kann voreingestellt werden. Auf diese Weise kann die gewünschte Klemmkraft der fertigen Schraubverbindung vorbestimmt werden.

Der Abstand S wird so lange aufrechterhalten, bis die endgültige Klemmkraft im Kraftspeicher aufgebaut ist. Bei weiterem Drehen der im Werkzeug 11 sitzenden Befestigungsschraube 12 wird der Kraftspeicher 18 zusammengedrückt, weil seine Speicherkraft überschritten wird. Dadurch kommt der Kopf 20 der Befestigungsschraube 12 am ersten Bauteil 14 zur Anlage. Anschließend wird die Verbindung zwischen der Befestigungsschraube 12 und dem Werkzeug 11 gelöst. Dadurch wird die im Kraftspeicher 18 gespeicherte Kraft als Klemmkraft auf die fertige Schraubverbindung übertragen.

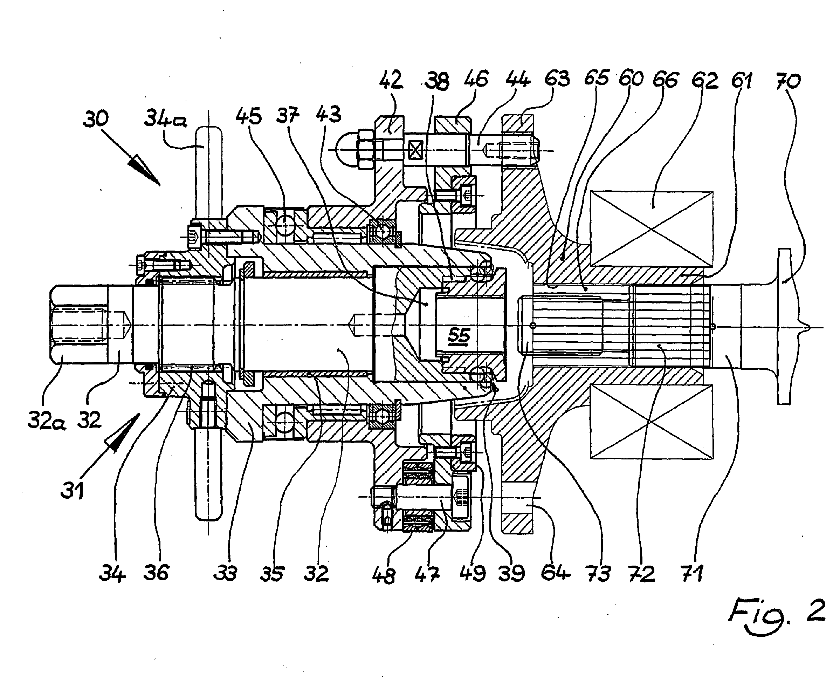

Die Figuren 2 bis 8 zeigen ein weiteres Ausführungsbeispiel der erfindungsgemäßen Vorrichtung 30. In diesem Ausführungsbeispiel soll eine Radnabe 60 mit der Gelenkglocke 70 (nur angedeutet) einer nicht darstellten Antriebswelle eines Kraftfahrzeugs verbunden werden. Die Radnabe 60 sitzt mit einem Radnabenbund 61 in einem Radlager 62. Der Radnabenbund 61 weist eine Bohrung 65 mit einer axialen Innenverzahnung 66 auf. Die Radnabe 60 weist ferner einen Radnabenflansch 63 mit mehreren axialen Bohrungen 64 auf. Die Gelenkglocke 70 ist mit einem Bolzen 71 mit einer axialen Außenverzahnung 72 versehen. In axialer Verlängerung des Bolzens 71 schließt sich ein Gewindezapfen 73 an. Der Bolzen 71 mit dem Gewindezapfen 73 sitzt unverdrehbar in der Bohrung 65 des Radnabenbundes 61. Nur das freie Ende des Gewindezapfens 73 ragt aus der Bohrung 65 heraus. Bei dieser Anordnung handelt es sich um eine Presspassung, das heißt, dass zum Einziehen des Gewindezapfens eine Fügekraft aufgebracht werden muss.

Um eine feste Verbindung zwischen Radnabe 60 und Gelenkglocke 70 herzustellen, muss eine Schraubverbindung zwischen den beiden Bauteilen 60, 70 erfolgen, indem eine Befestigungsmutter 55 auf den Gewindezapfen 73 aufgeschraubt und auf der Radnabe (70) verspannt wird. Hierzu wird die erfindungsgemäße Vorrichtung 30 verwendet.

Die erfindungsgemäße Vorrichtung 30 weist ein Werkzeug 31 auf, welches aus einem Steckschlüssel 32, einer Kugelspannhülse 33 und einer Verriegelungsmutter 34 zusammengesetzt ist. Die Verriegelungsmutter 34 ist mit Griffen 34a versehen und mittels Schrauben fest mit der Kugelspannhülse 33 verbunden und auf dem im Wesentlichen zylindrisch ausgebildeten Steckschlüssel axial bewegbar, im Ausführungsbeispiel über ein Trapezgewinde 36. Diese axiale Bewegung der Kugelspannhülse 33 kann bspw. auch auf hydraulischem oder pneumatischem Weg erfolgen. Mit der Axialbewegung der Verriegelungsmutter wird daher auch die Kugelspannhülse 33 über ein Axialgleitlager 35 gegenüber dem Steckschlüssel 32 axial bewegt. Der Steckschlüssel 32 weist an seinem ins Freie ragenden Ende einen Außenmehrkant 32a auf.

Am freien Ende des Steckschlüssels 32 ist eine axiale Vertiefung 37 vorgesehen, in der eine Ausnehmung 38 zur Aufnahme der Befestigungsmutter 55 angebracht ist. Die Ausnehmung 38 ist als Innenmehrkant korrespondierend zum Außenmehrkant 56 der Befestigungsmutter 55 ausgebildet. Damit ist die Befestigungsmutter 55 unverdrehbar im Steckschlüssel gehalten.

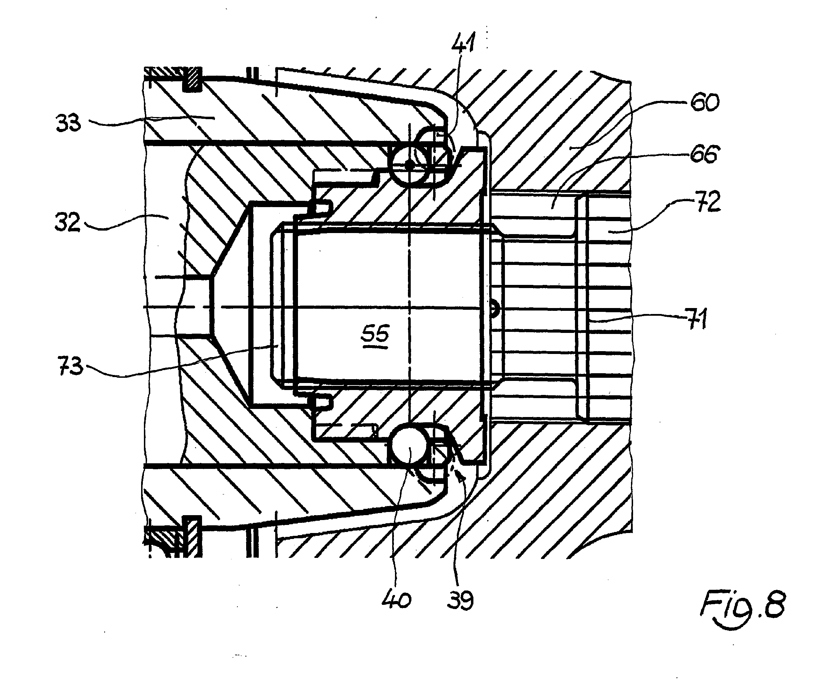

Damit die Befestigungsmutter 55 aus dem Steckschlüssel 32 nicht heraus fällt, ist eine Klemmeinrichtung 39 mit Klemmkörpern, in diesem Fall Klemmkugeln 40, vorgesehen. Die Klemmeinrichtung 39 ist aus dem freien Ende des Steckschlüssels 32 und dem freien Ende der Kugelspannhülse 33 gebildet. Das freie Ende der Kugelspannhülse weist eine im Querschnitt etwa viertelkreisförmige Ausdrehung 41 auf (vgl. Figur 8).

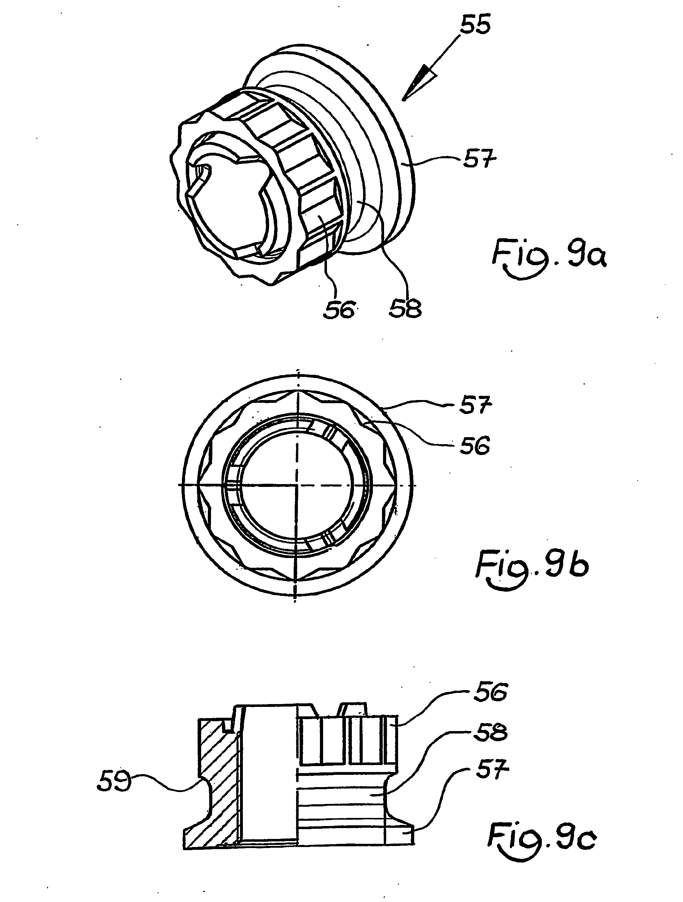

Ein Ausführungsbeispiel einer Befestigungsmutter 55 ist in den Figuren 9a bis 9c als Einzelteil dargestellt. Sie ist mit einem Außenmehrkant 56, einer Klemmschulter 59, einem Auflageflansch 57 und einer dazwischen ausgebildeten Ringnut 58 versehen. Wenn die Befestigungsmutter 55 in die Ausnehmung 38 am freien Ende des Steckschlüssels eingesetzt ist, greifen die Klemmkugeln 40 in diese Ringnut 58 ein und stützen sich an der Klemmschulter 59 ab, wobei das freie Ende der Kugelspannhülse 33 die Kugeln abdeckt. Auf diese Weise ist die Befestigungsmutter 55 klemmend und somit axial unbewegbar im Steckschlüssel 32 gehalten. Die Betätigung der Klemmeinrichtung 39 kann bspw. auch beim Einsetzen der Befestigungsmutter 55 automatisch ausgelöst werden.

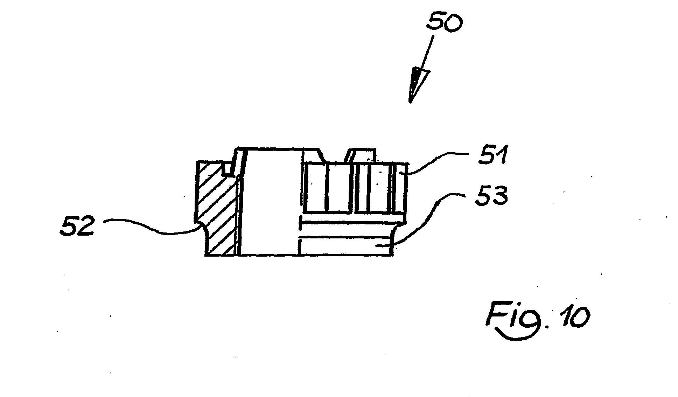

Figur 10 zeigt ein zweites Ausführungsbeispiel einer Befestigungsmutter 50, die ebenfalls einen Außenmehrkant 51 und eine Klemmschulter 52 aufweist. An die Klemmschulter 52 schließt sich in axialer Verlängerung der Klemmschulter 52 ein verlängerter Bund 53 an, so dass sich statt einer Ringnut ein Hinterschnitt ergibt. Nun können Klemmelemente die Klemmschulter hintergreifen. Eine solche Befestigungsmutter 50 hat den Vorteil, dass sie auf einfache Weise durch Pressen hergestellt werden kann. Das Eindrehen der Ringnut entfällt.

Statt einer Klemmmechanik mit Klemmkugeln oder anderen Klemmkörpern wie bspw. Klauen kann die Befestigungsmutter 50, 55 auch mit anderen geeigneten Vorrichtungen gehalten werden, bspw. mit Magneten. Da die Halterung für die Befestigungsmutter 50, 55 beliebig ausgestaltet sein kann, wird die Form der Befestigungsmutter 50, 55 an die jeweilige Halterung angepasst, so dass die Befestigungsmutter 50, 55 sehr variabel ausgestaltet sein kann. Auch die Gestaltung des vom Außenmehrkant 51, 56 abgewandten Bereichs der Befestigungsmutter 50, 55, ist der Ausbildung der im Einzelfall verwendeten Bauteile angepasst (in den Ausführungsbeispielen als Auflageflansch 57 bzw. Bund 53).

Auf der Kugelspannhülse 33 ist ein Lagerflansch 42 mittels eines Rillenkugellagers 43 gelagert. An dem der Radnabe 60 zugewandten Ende des Lagerflansches 42 sind axial ausgerichtete Führungsbolzen 44 befestigt, die in die Bohrungen 64 des Radnabenflanschs 63 aufgesteckt werden und die gesamte Vorrichtung 30 auf der Radnabe 60 abnehmbar halten. Über ein Axiallager 45 stützt sich die Kugelspannhülse 33 auf dem Lagerflansch 42 ab.

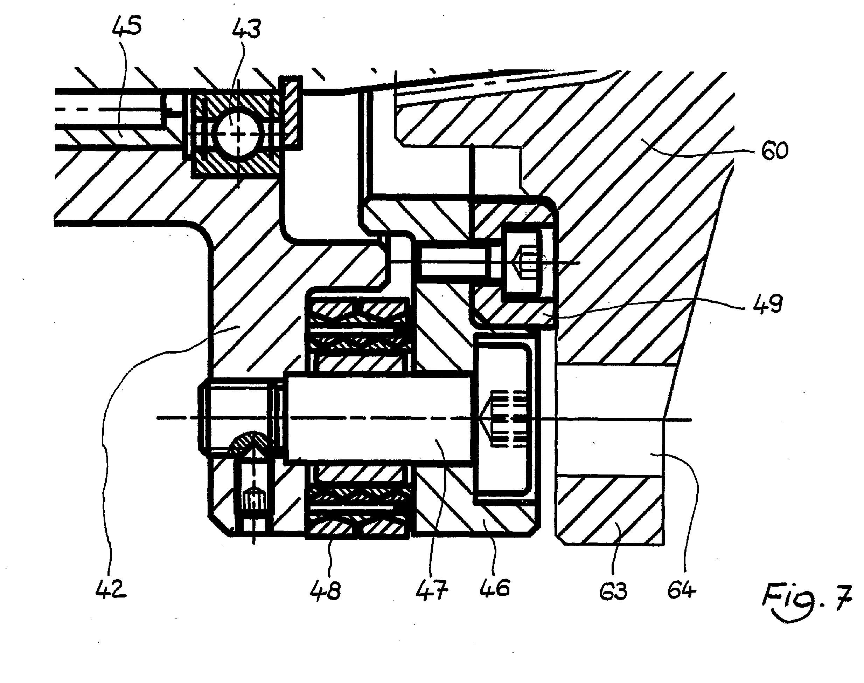

Ein Stützflansch 46 ist zwischen dem Lagerflansch 42 und der Radnabe 60 auf den Führungsbolzen 44 axial bewegbar angeordnet. Im Lagerflansch 42 sind Lagerbolzen 47 fest verschraubt. Der Stützflansch 46 ist auf den Lagerbolzen 47 axial verschiebbar. Zwischen dem Stützflansch 46 und dem Lagerflansch 42 sind Kraftspeicher 48, im Ausführungsbeispiel als Druckfedern ausgeführt, angeordnet, die den Lagerbolzen 47 ringförmig umgeben. Die Kraftspeicher können selbstverständlich auch als hydraulische oder pneumatische Kraftspeicher ausgebildet sein. Im Stützflansch 47 ist auf der der Radnabe 60 zugewandten Fläche ein Abstandsring 49 als Abstandshalter zentrisch angeordnet (vgl. Figur 7).

Nun wird der Ablauf des erfindungsgemäßen Verfahrens anhand der Figuren 2 bis 6 näher beschrieben.

In einem ersten in Figur 2 dargestellten Schritt wird die Befestigungsmutter 55 in die Ausnehmung 38 am freien Ende des Steckschlüssels 32 eingesetzt.

Durch Drehen der Verriegelungsmutter 34 wird die Kugelspannhülse 33 entlang dem Steckschlüssel 32 axial verschoben. In der geöffneten Stellung gelangen die Klemmkugeln 40 in die Ausdrehung 41 und haben daher Spiel für eine Radialbewegung. Nun kann die Befestigungsmutter 55 in die Ausnehmung 38 eingesetzt werden. Beim Verschieben der Kugelspannhülse 33 in Richtung Radnabe 60 drückt die Innenwand der Kugelspannhülse die Klemmkugeln 40 aus der Ausdrehung 41 heraus und in die Ringnut 58 der Befestigungsmutter hinein. Die Befestigungsmutter 55 ist nun unverdrehbar und axial unbeweglich gehalten.

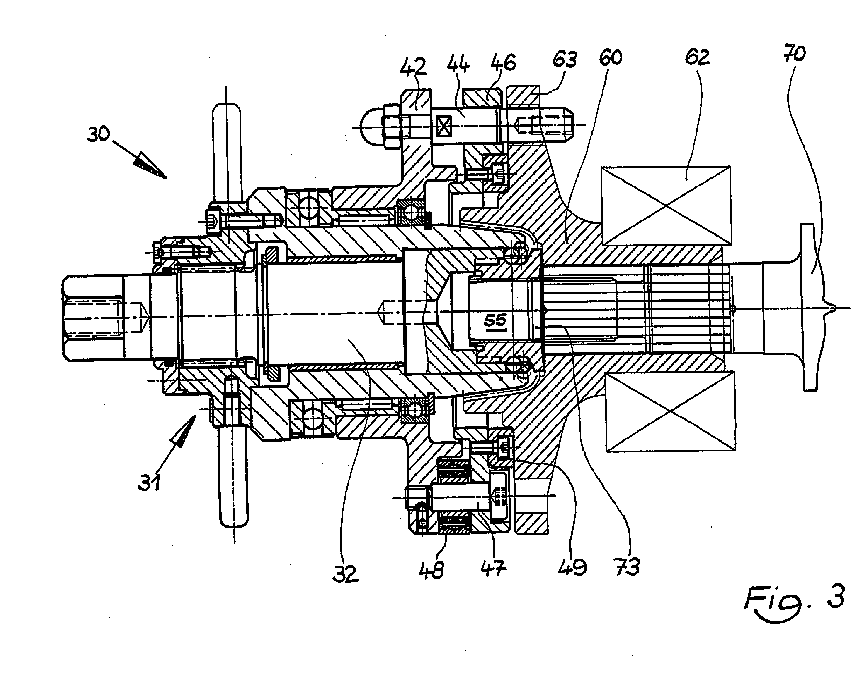

Im zweiten Schritt gemäß Figur 3 wird die erfindungsgemäße Vorrichtung 30 auf den Radnabenflansch 63 aufgesteckt. Dabei werden die Führungsbolzen 44 des Lagerflanschs 42 in die Bohrungen 64 des Radnabenflanschs 63 eingesteckt. Dabei nähert sich die Befestigungsmutter 55 dem aus der Bohrung 65 heraus ragenden freien Ende des Gewindezapfens 73 des Bolzens 71 der Gelenkglocke 70, bis sie mit dem freien Ende des Gewindezapfens 73 in Kontakt kommt und anschnäbelt. Der Aufsteckvorgang ist beendet, wenn der am Stützflansch 46 angeordnete Abstandsring 49 fest am Radnabenflansch 63 aufliegt. Hierbei besteht immer noch ein Abstand zwischen der Befestigungsmutter 55 und der Radnabe 60, d.h. die Befestigungsmutter 55 sitzt nicht auf der Radnabe 60 auf.

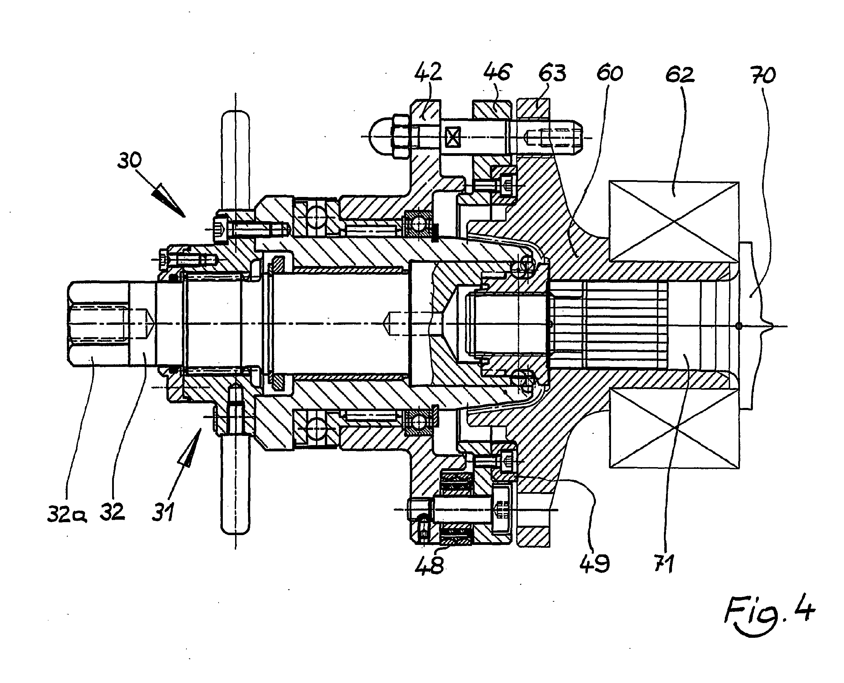

Der dritte Schritt gemäß Figur 4 beginnt mit der Einleitung des Einzugsvorgangs. Durch Drehen des Steckschlüssels 32 (Angriff eines Werkzeugs am Außenmehrkant 32a) dreht sich das Werkzeug 31. Das heißt, der Steckschlüssel 32, die Kugelspannhülse 33 und die Verriegelungsmutter 34 drehen sich mit der gleichen Winkelgeschwindigkeit. Damit dreht sich auch die Befestigungsmutter 55, ohne an der Radnabe 60 anzuliegen. Dadurch wird der Bolzen 71 der Gelenkglocke 70 in die Radnabe 60 eingezogen, bis die Gelenkglocke 70 sich am Radlager 62 abstützt. Der Abstand S beträgt im Ausführungsbeispiel etwa 0,5 mm.

Die Drehung des Werkzeugs 31 kann auch bspw. durch hydraulische oder pneumatische Mechanismen bewirkt werden.

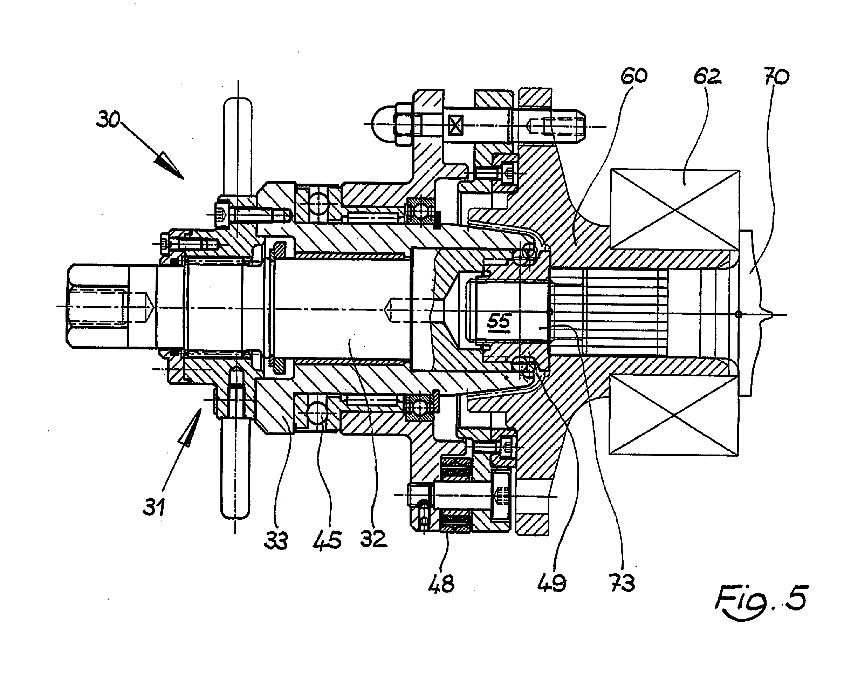

Sobald die Gelenkglocke 70 voll eingezogen ist und am Radlager 62 anliegt, ist gemäß Figur 5 der Fügevorgang abgeschlossen. Die Drehung des Steckschlüssels 32 wird nun ohne Unterbrechung fortgesetzt. wobei das Drehmoment und die Klemmkraft ansteigen. Sobald die Klemmkraft größer ist als die Speicherkraft des Kraftspeichers 48 (im Ausführungsbeispiel 40kN), wird die Befestigungsmutter 55 durch Zusammendrücken des Kraftspeichers 48 an der Radnabe 60 zur Anlage gebracht. Der Spalt S (im Ausführungsbeispiel ca. ½ mm) wird geschlossen. Die Speicherkraft des Kraftspeichers 48 ist somit größer als die Fügekraft und entspricht im Extremfall der gewünschten Klemmkraft der fertigen Schraubverbindung (vgl. Figur 1).

Bis zu diesem Punkt treten Reibungsverluste nur in Form der Gewindereibung zwischen der Befestigungsmutter 55 und dem Gewindezapfen 73 auf. Die Befestigungsmutter 55 liegt nicht an der Radnabe 60, so dass keine Kopfreibung auftritt. Die Oberfläche der Radnabe 60 wird im Auflagebereich nicht beeinträchtigt. Eine unkontrollierbare Veränderung des Reibwerts wird vermieden.

Nun liegt die Gelenkglocke 70 am Radlager 62 an, und die Befestigungsmutter 55 liegt an der Radnabe 60 an. Das heißt, dass es im Verband keinen freien Weg für eine Axialbewegung mehr gibt. Der Einzugsvorgang der Gelenkglocke 70 ist beendet, doch die eigentliche Verspannung der Befestigungsmutter 55 hat noch nicht stattgefunden. Der Einzugsvorgang und der Verspannvorgang sind getrennte Prozesse, so dass die Krafteinleitung ins System kontrolliert, d.h. ohne Einfluss der Kopfreibung, erfolgen kann.

Nun beginnt der eigentliche Verspannvorgang, indem der Steckschlüssel 32 noch weiter gedreht wird, obwohl es keinen freien Weg für eine Axialbewegung mehr gibt. Der Steckschlüssel 32 führt in der Regel keine volle Umdrehung mehr aus. Die Befestigungsmutter 55 dreht sich im Ausführungsbeispiel nun noch um einen kleinen Winkelbereich auf der Oberfläche der Radnabe 60. Nur über diesen kleinen Winkelbereich tritt nun noch eine Kopfreibung auf, so dass die Oberfläche der Radnabe 60 in diesem Bereich praktisch unbeeinträchtigt bleibt. Die Größe des Winkelbereichs hängt von der Dimensionierung im Einzelfall ab, kann aber typischerweise 100° bis 220° betragen.

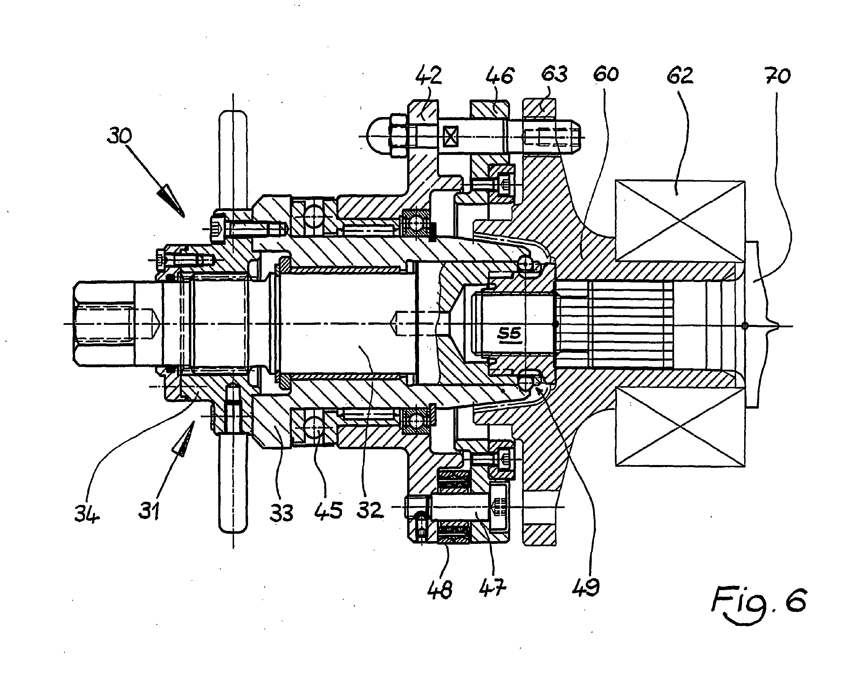

Im letzten Schritt gemäß Figur 6 wird die Klemmung der Befestigungsmutter 55 gelöst, indem die Kugelspannhülse 33 durch Drehen der Verriegelungsmutter 34 zurückgezogen wird. Damit wird die Klemmeinrichtung 49 gelöst. Die Befestigungsmutter wird vom Werkzeug 31 freigegeben. Nun wird das Werkzeug abgezogen. Der Montagevorgang ist abgeschlossen.

Die bei dem erfindungsgemäßen Verfahren auftretenden Kräfte und Momente können selbstverständlich messtechnisch erfasst, ausgewertet und gespeichert werden. Sie stehen damit für jeden Montagevorgang individuell zur Verfügung.

Die erfindungsgemäße Vorrichtung und das erfindungsgemäße Verfahren ermöglichen das Aufbringen zumindest einer vordefinierten Fügekraft, maximal der gesamten gewünschten Klemmkraft auf eine Schraubverbindung. Dabei kann der Drehvorgang vom ersten bis zum letzten Schritt ohne Unterbrechung fortgesetzt werden, so dass das Verfahren im Prinzip automatisierbar ist. Wenn die gesamte gewünschte Klemmkraft reibungsfrei aufgebracht wird (vgl. Figur 1), entfällt die Kopfreibung vollständig. Das bedeutet, dass zumindest für das Zusammenfügen der Bauteile, im Ausführungsbeispiel gemäß Figur 1 auch für das Verspannen, die eigentlichen Schraubwerkzeuge kleiner dimensioniert sein können, weil ein geringeres Drehmoment als bisher aufgebracht werden muss.

Die erfindungsgemäße Vorrichtung und das erfindungsgemäße Verfahren eignen sich selbstverständlich nicht nur für die Achsmontage von Kraftfahrzeugen. Sie sind vielmehr auf alle Schraubverbindungen von Bauteilen anwendbar, bspw. an Windkraftanlagen oder bei Ring-flanschrohren in der chemischen Industrie.

## Patentansprüche

1. Vorrichtung (10, 30) zum Herstellen einer Schraubverbindung zwischen einem ersten Bauteil (14, 60) und mindestens einem weiteren Bauteil (15, 70) mittels einer Befestigungsschraube (12) oder einer Befestigungsmutter (50, 55) und eines korrespondierenden Befestigungselements (16, 73), wobei die Vorrichtung (10, 30) ein drehbar gelagertes Werkzeug (11, 31) aufweist, in dem die Befestigungsschraube (12) bzw. Befestigungsmutter (50, 55) unverdrehbar und axial ortsfest gehalten ist und in dem der Kopf (20) der Befestigungsschraube (12) bzw. die Befestigungsmutter (50, 55) so lange mit einem Abstand S zum ersten Bauteil (14, 60) gehalten ist, bis die beiden Bauteile (14, 60; 15, 70) zusammengefügt sind, **dadurch gekennzeichnet, dass** zwischen dem Werkzeug (11, 31) und dem ersten Bauteil (14, 60) mindestens ein Kraftspeicher (18, 48) vorgesehen ist.

2. Vorrichtung nach Anspruch 1, **dadurch gekennzeichnet, dass** sich das Werkzeug (11, 31) über ein Axiallager (17, 45) auf einem Lagerflansch (22, 42) abstützt.

3. Vorrichtung nach Anspruch 2, **dadurch gekennzeichnet, dass** der Lagerflansch (22, 42) auf dem Werkzeug (11, 31) gelagert ist.

4. Vorrichtung nach einem der vorhergehenden Ansprüche, **dadurch gekennzeichnet, dass** der Kraftspeicher (18, 48) als in Fügerichtung der Bauteile (14, 60; 15, 70) um den Abstand S kraftabhängig komprimierbare und expandierbare Einrichtung ausgebildet ist.

5. Vorrichtung nach Anspruch 4, **dadurch gekennzeichnet, dass** der mindestens eine Kraftspeicher (18, 48) als mechanisch arbeitende Einrichtung ausgebildet ist.

6. Vorrichtung nach Anspruch 4, **dadurch gekennzeichnet, dass** der mindestens eine Kraftspeicher (18, 48) als hydraulisch oder pneumatisch arbeitende Einrichtung ausgebildet ist.

7. Vorrichtung nach einem der vorhergehenden Ansprüche, **dadurch gekennzeichnet, dass** der mindestens eine Kraftspeicher (18, 48) zwischen einem auf dem Werkzeug (11, 31) gelagerten Lagerflansch (22, 42) und einem zwischen dem Lagerflansch (22, 42) und dem ersten Bauteil (14, 60) angeordneten Stützflansch (21, 46) vorgesehen ist.

8. Vorrichtung nach Anspruch 7, **dadurch gekennzeichnet, dass** der Stützflansch (46) auf am Lagerflansch (42) befestigten Führungsbolzen (44) axial bewegbar ist.

9. Vorrichtung nach einem der Ansprüche 7 oder 8, **dadurch gekennzeichnet, dass** der mindestens eine Kraftspeicher (48) um mindestens einen Lagerbolzen (47) angeordnet ist und der Stützflansch (46) auf dem mindestens einen Lagerbolzen (47) axial bewegbar ist.

10. Vorrichtung nach einem der Ansprüche 7 bis 9, **dadurch gekennzeichnet, dass** der Stützflansch (46) auf seiner dem ersten Bauteil (60) zugewandten Fläche mindestens einen Abstandshalter (49) aufweist.

11. Vorrichtung nach einem der vorhergehenden Ansprüche, **dadurch gekennzeichnet, dass** das Werkzeug (31) aus einem Steckschlüssel (32), einer Kugelspannhülse (33) und einer Verriegelungsmutter (34) zusammengesetzt ist.

12. Vorrichtung nach Anspruch 11, **dadurch gekennzeichnet, dass** das Werkzeug (31) durch Drehen des Steckschlüssels (32) drehbar ist.

13. Vorrichtung nach einem der Ansprüche 11 oder 12, **dadurch gekennzeichnet, dass** durch Drehen der Verriegelungsmutter (34) die Kugelspannhülse (33) entlang des Steckschlüssels (32) axial verschiebbar ist.

14. Vorrichtung nach einem der Ansprüche 11 bis 13, **dadurch gekennzeichnet, dass** das freie Ende des Steckschlüssels (32) eine axiale Vertiefung (37) mit einer Ausnehmung (38) zur Aufnahme einer Befestigungsmutter (50, 55) aufweist.

15. Vorrichtung nach einem der Ansprüche 11 bis 14, **dadurch gekennzeichnet, dass** das freie Ende des Steckschlüssels (32) und das freie Ende der Kugelspannhülse (33) eine Klemmeinrichtung (39) für eine Befestigungsschraube (12) oder Befestigungsmutter (50, 55) bilden.

16. Vorrichtung nach Anspruch 15, **dadurch gekennzeichnet, dass** die Klemmeinrichtung (39) mit Klemmkörpern (40) versehen ist.

17. Vorrichtung nach Anspruch 16, **dadurch gekennzeichnet, dass** das freie Ende der Kugelspannhülse (33) eine Ausdrehung (41) aufweist und dass bei axial verschobener Kugelspannhülse (33) in einer Richtung die Klemmkörper (40) fixiert sind und die Befestigungsschraube (12) oder Befestigungsmutter (55) klemmend gehalten ist und dass bei axial verschobener Kugelspannhülse (33) in der Gegenrichtung die Klemmkörper (40) in der Ausdrehung (41) liegen und die Befestigungsschraube (12) oder Befestigungsmutter (50, 55) freigegeben ist.

18. Verfahren zum Herstellen einer Schraubverbindung zwischen einem ersten Bauteil (14, 60) und mindestens einem weiteren Bauteil (15, 70) mittels einer Befestigungsschraube (12) oder einer Befestigungsmutter (50, 55) und eines korrespondierenden Befestigungselements (16, 73), wobei mittels einer Vorrichtung (10, 30), die ein drehbar gelagertes Werkzeug (11, 31) aufweist
- durch Drehen der Befestigungsschraube (12) bzw. Befestigungsmutter (50, 55) das Befestigungselement (16, 73) auf die Befestigungsschraube (12) aufgezogen bzw. in die Befestigungsmutter (55) eingezogen wird, bis die beiden Bauteile (14, 60; 15, 70) zusammengefügt sind, wobei der Kopf (20) der Befestigungsschraube (12) bzw. die Befestigungsmutter (50, 55) zum ersten Bauteil (14, 60) mit einem Abstand S gehalten wird,
- die Befestigungsschraube (12) bzw. die Befestigungsmutter (50, 55) anschließend angezogen wird, bis sie am ersten Bauteil (14, 60) anliegt,
**dadurch gekennzeichnet, dass**
- zumindest die Fügekraft der fertigen Schraubverbindung mittels eines Kraftspeichers (18, 48), der zwischen dem Werkzeug (11, 31) und dem ersten Bauteil (14, 60) vorgesehen ist, vorbestimmt wird.

19. Verfahren nach Anspruch 18, **dadurch gekennzeichnet, dass** die gesamte gewünschte Klemmkraft der fertigen Schraubverbindung mittels des Kraftspeichers (18, 48) vorbestimmt wird.

20. Verfahren nach einem der Ansprüche 18 oder 19, **dadurch gekennzeichnet, dass** die durch Drehen der Befestigungsschraube (12) bzw. Befestigungsmutter (50, 55) in das System eingebrachte Kraft im Kraftspeicher (18, 48) aufgenommen und gespeichert wird.

21. Verfahren nach einem der Ansprüche 18 bis 20, **dadurch gekennzeichnet, dass** der Kopf (20) der Befestigungsschraube (19) bzw. die Befestigungsmutter (50, 55) in Richtung auf das erste Bauteil (15, 60) bewegt wird, sobald die in das System eingebrachte Kraft die Speicherkraft des Kraftspeichers (18, 48) übersteigt.

22. Verfahren nach einem der Ansprüche 18 bis 21, **dadurch gekennzeichnet, dass** nach dem Verspannen der Befestigungsschraube (12) bzw. Befestigungsmutter (50, 55) die im Kraftspeicher (18, 48) gespeicherte Kraft auf die fertige Schraubverbindung übertragen wird.

23. Verfahren nach Anspruch 22, **dadurch gekennzeichnet, dass** die vom Kraftspeicher (18, 48) auf die fertige Schraubverbindung übertragenen Kraft der gewünschten Klemmkraft der Schraubverbindung entspricht.

## Claims

1. A device (10, 30) for producing a screw connection between a first component (14, 60) and at least one further component (15, 70) using a fastening screw (12) or a fastening nut (50, 55) and a corresponding fastening element (16, 73), the device (10, 30) having a tool (11, 31), which is mounted so it is rotatable, and in which the fastening screw (12) or fastening nut (50, 55) is held so it is not rotatable and is axially fixed and in which the head (20) of the fastening screw (12) or the fastening nut (50, 55) is held at a spacing S to the first component (14, 60) until the two components (14, 60; 15, 70) are assembled, **characterized in that** at least one force accumulator (18, 48) is provided between the tool (11, 31) and the first component (14, 60).

2. The device according to Claim 1, **characterized in that** the tool (11, 31) is supported via an axial bearing (17, 35) on a bearing flange (22, 42).

3. The device according to Claim 2, **characterized in that** the bearing flange (22, 42) is mounted on the tool (11, 31).

4. The device according to one of the preceding claims, **characterized in that** the force accumulator (18, 48) is implemented as an apparatus which is compressible and expandable as a function of force by the spacing S in the joining direction of the components (14, 60; 15, 70).

5. The device according to Claim 4, **characterized in that** the at least one force accumulator (18, 40) is implemented as a mechanically operating apparatus.

6. The device according to Claim 4, **characterized in that** the at least one force accumulator (18, 48) is implemented as a hydraulically or pneumatically operating apparatus.

7. The device according to one of the preceding claims, **characterized in that** the at least one force accumulator (18, 48) is provided between a bearing flange (22, 42), which is mounted on the tool (11, 31), a support flange (21, 46), which is situated between the bearing flange (22, 42) and the first component (14, 60).

8. The device according to Claim 7, **characterized in that** the support flange (46) is axially movable on guide bolts (44), which are fastened on the bearing flange (42).

9. The device according to one of Claim 7 or 8, **characterized in that** the at least one force accumulator (48) is situated around at least one bearing bolt (47) and the support flange (46) is axially movable on the at least one bearing bolt (47).

10. The device according to one of Claims 7 through 9, **characterized in that** the support flange (46) has at least one spacer (49) on its surface facing toward the first component (60).

11. The device according to one of the preceding claims, **characterized in that** the tool (31) is composed of a socket (32), a ball clamping sleeve (33), and a locking nut (34).

12. The device according to Claim 11, **characterized in that** the tool (31) is rotatable by rotating the socket (32).

13. The device according to one of Claims 11 or 12, **characterized in that** the ball clamping sleeve (33) is axially displaceable along the socket (32) by rotating the locking nut (34).

14. The device according to one of Claims 11 through 13, **characterized in that** the free end of the socket (32) has an axial depression (37) having a recess (38) for receiving a fastening nut (50, 55).

15. The device according to one of Claims 11 through 14, **characterized in that** the free end of the socket (32) and the free end of the ball clamping sleeve (33) form a clamping apparatus (39) for a fastening screw (12) or fastening nut (50, 55).

16. The device according to Claim 15, **characterized in that** the clamping apparatus (39) is provided with clamping bodies (40).

17. The device according to Claim 16, **characterized in that** the free end of the ball clamping sleeve (33) has a turned area (41), and, when the ball clamping sleeve (33) is axially displaced in one direction, the clamping bodies (40) are fixed and the fastening screw (12) or fastening nut (55) is held clamped, and, when the ball clamping sleeve (33) is axially displaced in the opposite direction, the clamping bodies (40) rest in the turned area (41) and the fastening screw (12) or fastening nut (50, 55) is released.

18. A method for producing a screw connection between one first component (14, 60) and at least one further component (15, 70) using a fastening screw (12) or a fastening nut (50, 55) and a corresponding fastening element (16, 73), using a device (10, 30), which has a tool (11, 31) mounted so it is rotatable,
- by rotating the fastening screw (12) or fastening nut (50, 55), the fastening element (16, 73) being tightened on the fastening screw (12) or drawn into the fastening nut (55), until the two components (14, 60; 15, 70) are assembled, the head (20) of the fastening screw (12) or the fastening nut (50, 55) being held at a spacing S to the first component (14, 60),
- the fastening screw (12) or the fastening nut (50, 55) subsequently being tightened until it presses against the first component (14, 60),
**characterized in that**
- at least the joining force of the finished screw connection is predetermined using a force accumulator (18, 48), which is provided between the tool (11, 31) and the first component (14, 60).

19. The method according to Claim 18, **characterized in that** the total desired clamping force of the finished screw connection is predetermined using the force accumulator (18, 48).

20. The method according to one of Claims 18 or 19, **characterized in that** the force introduced into the system by rotating the fastening screw (12) or fastening nut (50, 55) is absorbed and stored in the force accumulator (18, 48).

21. The method according to one of Claims 18 through 20, **characterized in that** the head (20) of the fastening screw (19) or the fastening nut (50, 55) is moved in the direction toward the first component (15, 60) as soon as the force introduced into the system exceeds the stored force of the force accumulator (18, 48).

22. The method according to one of Claims 18 through 21, **characterized in that** after the bracing of the fastening screw (12) or fastening nut (50, 55), the force stored in the force accumulator (18, 48) is transmitted to the finished screw connection.

23. The method according to Claim 22, **characterized in that** the force transmitted from the force accumulator (18, 48) to the finished screw connection corresponds to the desired clamping force of the screw connection.

## Revendications

1. Dispositif (10, 30) pour établir un assemblage vissé entre un premier composant (14, 60) et au moins un autre composant (15, 70) au moyen d'une vis de fixation (12) ou d'un écrou de fixation (50, 55) et d'un élément de fixation (16, 73) correspondant, le dispositif (10, 30) présentant un outil (11, 31) monté tournant, dans lequel la vis de fixation (12) ou l'écrou de fixation (50, 55) est maintenu de façon imperdable et fixe axialement et dans lequel la tête (20) de la vis de fixation (12) ou l'écrou de fixation (50, 55) est maintenu(e) à une distance S du premier composant (14, 60) jusqu'à ce que les deux composants (14, 60 ; 15, 70) soient assemblés, **caractérisé en ce qu'**au moins un accumulateur de force (18, 48) est prévu entre l'outil (11, 31) et le premier composant (14, 60).

2. Dispositif selon la revendication 1, **caractérisé en ce que** l'outil (11, 31) s'appuie au moyen d'un palier axial (17, 45) sur une bride de palier (22, 42).

3. Dispositif selon la revendication 2, **caractérisé en ce que** la bride de palier (22, 42) est montée sur l'outil (11, 31).

4. Dispositif selon l'une quelconque des revendications précédentes, **caractérisé en ce que** l'accumulateur de force (18, 48) est conçu sous forme de dispositif comprimable et expansible de la distance S en fonction de la force dans le sens d'assemblage des composants (14, 60 ; 15, 70).

5. Dispositif selon la revendication 4, **caractérisé en ce que** le au moins un accumulateur de force (18, 48) est conçu comme dispositif travaillant de façon mécanique.

6. Dispositif selon la revendication 4, **caractérisé en ce que** le au moins un accumulateur de force (18, 48) est conçu comme dispositif travaillant de façon hydraulique ou pneumatique.

7. Dispositif selon l'une quelconque des revendications précédentes, **caractérisé en ce que** le au moins un accumulateur de force (18, 48) est prévu entre une bride de palier (22, 42) montée sur l'outil (11, 31) et une bride de soutien (21, 46) disposée entre la bride de palier (22, 42) et le premier composant (14, 60).

8. Dispositif selon la revendication 7, **caractérisé en ce que** la bride de soutien (46) peut être déplacée axialement sur des boulons de guidage (44) fixés sur la bride de palier (42).

9. Dispositif selon l'une quelconque des revendications 7 ou 8, **caractérisé en ce que** le au moins un accumulateur de force (48) est disposé autour d'au moins un boulon de palier (47) et la bride de soutien (46) peut être déplacée axialement sur le au moins un boulon de palier (47).

10. Dispositif selon l'une quelconque des revendications 7 à 9, **caractérisé en ce que** la bride de soutien (46) présente au moins un écarteur (49) sur sa face tournée vers le premier composant (60).

11. Dispositif selon l'une quelconque des revendications précédentes, **caractérisé en ce que** l'outil (31) est composé d'une clé à douille (32), d'une douille de serrage sphérique (33) et d'un écrou de verrouillage (34).

12. Dispositif selon la revendication 11, **caractérisé en ce que** l'outil (31) peut tourner par rotation de la clé à douille (32).

13. Dispositif selon l'une quelconque des revendications 11 ou 12, **caractérisé en ce que** le douille de serrage sphérique (33) peut coulisser axialement le long de la clé à douille (32) par rotation de l'écrou de verrouillage (34).

14. Dispositif selon l'une quelconque des revendications 11 à 13, **caractérisé en ce que** l'extrémité libre de la clé à douille (32) présente une cavité (37) axiale avec un évidement (38) pour le logement d'un écrou de fixation (50, 55).

15. Dispositif selon l'une quelconque des revendications 11 à 14, **caractérisé en ce que** l'extrémité libre de la clé à douille (32) et l'extrémité libre de la douille de serrage sphérique (33) forment un système de serrage (39) pour une vis de fixation (12) ou un écrou de fixation (50, 55).

16. Dispositif selon la revendication 15, **caractérisé en ce que** le système de serrage (39) est doté de corps de serrage (40).

17. Dispositif selon la revendication 16, **caractérisé en ce que** l'extrémité libre de la douille de serrage sphérique (33) présente un alésage (41) et **en ce que** les corps de serrage (40) sont fixés lorsque la douille de serrage sphérique (33) déplacée axialement se trouve dans une direction et la vis de fixation (12) ou l'écrou de fixation (55) est maintenu (e) par serrage et **en ce que**, lorsque la douille de serrage sphérique (33) déplacée axialement se trouve dans la direction opposée, les corps de serrage (40) se situent dans l'alésage (41) et la vis de fixation (12) ou l'écrou de fixation (50, 55) est libéré(e).

18. Procédé pour établir un assemblage vissé entre un premier composant (14, 60) et au moins un autre composant (15, 70) au moyen d'une vis de fixation (12) ou d'un écrou de fixation (50, 55) et d'un élément de fixation (16, 73) correspondant, dans lequel, au moyen d'un dispositif (10, 30), qui présente un outil (11, 31) monté tournant,
- l'élément de fixation (16, 73) est enfilé sur la vis de fixation (12) ou est introduit dans l'écrou de fixation (55) par rotation de la vis de fixation (12) ou de l'écrou de fixation (50, 55), jusqu'à ce que les deux composants (14, 60 ; 15, 70) soient assemblés, la tête (20) de la vis de fixation (12) ou l'écrou de fixation (50, 55) étant maintenu(e) à une distance S du premier composant (14, 60),
- la vis de fixation (12) ou l'écrou de fixation (50, 55) est serrée(e) ensuite jusqu'à ce qu'elle ou qu'il s'applique sur le premier composant (14, 60),
**caractérisé en ce que**
- au moins la force d'assemblage de l'assemblage vissé achevé est prédéfinie au moyen d'un accumulateur de force (18, 48), qui est prévu entre l'outil (11, 31) et le premier composant (14, 60).

19. Procédé selon la revendication 18, **caractérisé en ce que** l'ensemble de la force de serrage souhaitée de l'assemblage vissé achevé est prédéfini au moyen de l'accumulateur de force (18, 48).

20. Procédé selon l'une quelconque des revendications 18 ou 19, **caractérisé en ce que** la force introduite dans le système par rotation de la vis de fixation (12) ou de l'écrou de fixation (50, 55) est réceptionnée et stockée dans l'accumulateur de force (18, 48).

21. Procédé selon l'une quelconque des revendications 18 à 20, **caractérisé en ce que** la tête (20) de la vis de fixation (19) ou l'écrou de fixation (50, 55) est déplacé(e) en direction du premier composant (15, 60) dès que la force introduite dans le système dépasse la force de l'accumulateur de force (18, 48).

22. Procédé selon l'une quelconque des revendications 18 à 21, **caractérisé en ce que**, après le serrage de la vis de fixation (12) ou de l'écrou de fixation (50, 55), la force accumulée dans l'accumulateur de force (18, 48) est transmise à l'assemblage vissé achevé.

23. Procédé selon la revendication 22, **caractérisé en ce que** la force transmise de l'accumulateur de force (18, 48) à l'assemblage vissé achevé correspond à la force de serrage souhaitée de l'assemblage vissé.
